# FASCICULE DE BREVET EUROPEEN

(11) **EP 1 600 653 B1**
(45) Date de publication et mention de la délivrance du brevet: **31.10.2007**
(21) Numéro de dépôt: 05011089.9
(22) Date de dépôt: 23.05.2005
(51) Int. Cl.: F16D 65/097

(54) **Ressort de maintien et de guidage d'un moyen de friction et frein à disque muni d'au moins un tel ressort**
Führungsfeder für ein Reibelement und Scheibenbremse mit mindestens einer solchen Feder
Guiding spring for friction elements and disc brake comprising the same

(30) Priorité: 27.05.2004 FR 0405763
(43) Date de publication de la demande: 30.11.2005
(73) Titulaire: ROBERT BOSCH GMBH, 70442 Stuttgart (DE)
(72) Inventeur: Sinelnikow, Daniel, 93160 Noisy le Grand (FR); Masi, Vincent, 75020 Paris (FR)
(74) Mandataire: Hurwic, Aleksander Wiktor

(56) Documents cités:
- EP-A- 1 447 585
- DE-A- 10 050 013
- US-A- 5 901 815
- US-B1- 6 527 090

## Description

L'invention concerne un ressort de guidage et de maintien d'un moyen de friction. Plus précisément l'invention concerne un ressort permettant de maintenir un moyen de friction sur une chape d'un étrier de frein à disque. Le ressort de l'invention permet également de guider le moyen de friction en direction d'un disque du frein à disque. L'invention concerne également un frein à disque muni d'au moins un ressort de l'invention.

DE 10050013 décrit un frein à disque de type push-pull comportant un ressort fixé par élasticité dans une chape de frein.

Un but de l'invention est de fournir un ressort de guidage et de maintien d'un moyen de friction, dont la fabrication est simple. Un autre but de l'invention est de faciliter un montage d'un tel ressort sur une chape d'un étrier de frein à disque. Un but supplémentaire de l'invention est de fournir un tel ressort qui permette un guidage et un maintien des moyens de friction nécessaires à un bon fonctionnement d'un frein à disque muni d'un tel ressort.

Un dispositif de freinage d'un véhicule automobile est généralement muni d'un frein à disque. Un frein à disque comporte un étrier, une chape, des moyens de friction, et un disque. La chape est fixée sur le châssis du véhicule. L'étrier coulisse dans la chape. Le disque est entraîné par une roue du véhicule. L'étrier de frein à disque est muni d'un alésage ménagé dans un corps de l'étrier. Dans cet alésage coulisse un piston. Entre le piston et un fond de l'alésage est ménagée une chambre hydraulique, à volume variable. Une arrivée de liquide hydraulique dans la chambre hydraulique pousse le piston en direction des moyens de friction. Deux moyens de friction sont logés dans un espace ménagé entre un nez de l'étrier et un côté de l'alésage vers lequel se dirige le piston. Entre les deux moyens de friction est intercalé un disque. Ainsi, une première face du disque est dirigée vers une face d'un premier moyen de friction, situé du côté du piston. Une deuxième face du disque est dirigée vers une face d'un deuxième moyen de friction, disposé du côté du nez de l'étrier. Le disque est donc pris en sandwich entre les deux moyens de friction. Le disque est monté solidaire en rotation d'une roue du véhicule. Les moyens de friction sont montés fixes en rotation sur la chape.

Lors d'un freinage, l'avancée du piston dans la chambre hydraulique, due à une arrivée de liquide hydraulique dans la chambre, permet un déplacement des moyens de friction en direction du disque. Les moyens de friction sont maintenus plaqués contre le disque. Un frottement des moyens de friction sur le disque ralentit sa rotation.

Un étrier de frein à disque est généralement muni de deux moyens de frictions. Il est connu, pour maintenir chaque moyen de friction sur la chape d'utiliser deux ressorts de maintien. Chaque ressort de maintien sert également de ressort de guidage. En effet, le ressort doit permettre un mouvement du moyen de friction en direction du disque lors d'un freinage, et son retour dans une position repos à la fin dudit freinage. Le ressort doit donc permettre un guidage par coulissement parallèlement à un axe de rotation du disque. Il doit également permettre un bon maintien sur la chape, tangentiel et radial par rapport au disque. En effet, un degré de liberté du moyen de friction par rapport au disque doit uniquement exister en direction du disque. Le maintien du moyen de friction par le ressort doit être suffisant pour autoriser le déplacement du moyen de friction dans la direction voulue, et interdire ou limiter les déplacements dans les autres directions sachant que le moyen de friction est soumis à de nombreuses forces lors d'un freinage.

Le ressort doit donc être d'une part fixé solidement à la chape, et d'autre part maintenir le moyen de friction.

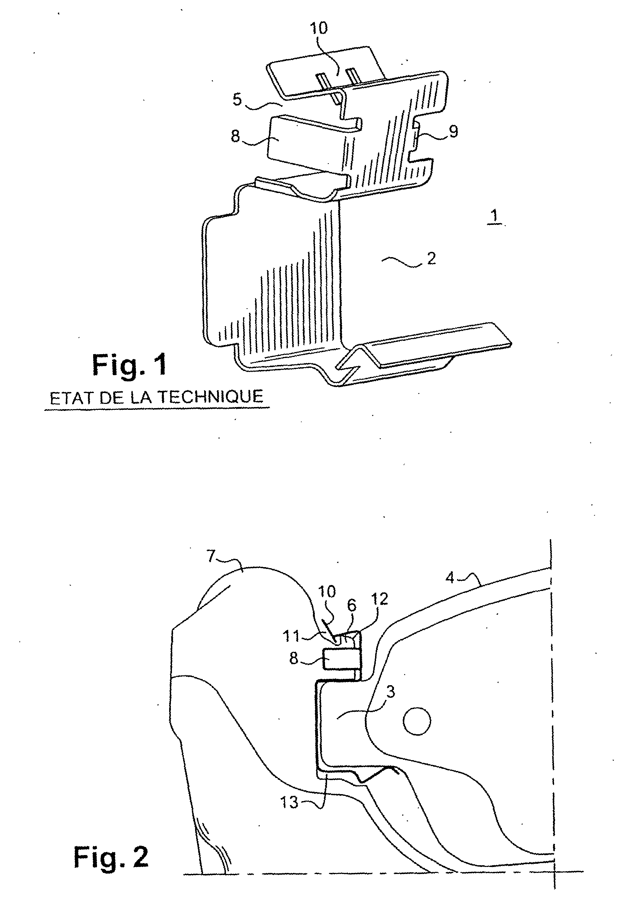

On connaît actuellement comme ressort de guidage et de maintien du moyen de friction, un ressort tel que représenté sur les figures 1, en perspective, et 2, en coupe, de l'état de la technique.

Sur la figure 1, on peut voir un ressort 1 de l'état de la technique non monté sur une chape de frein à disque. Un tel ressort 1 a une forme complexe. Réaliser le ressort 1 de l'état de la technique nécessite de nombreuses opérations de pliage.

Il faut premièrement ménager un espace 2 ayant des dimensions sensiblement égales à des dimensions d'une oreille 3 d'un moyen de friction 4 (figure 2). Par sensiblement égales, on entend que les dimensions de l'espace 2 sont telles qu'elles permettent d'accueillir l'oreille 3, et de la maintenir dans cet espace 2 avec un flottement contrôlé. Il faut également ménager un espace 5 ayant des dimensions sensiblement égales à une protubérance 6 d'une chape 7. La protubérance 6 sert à maintenir le ressort 1 sur la chape 7.

Pour empêcher un déplacement du ressort 1 parallèlement à l'axe de rotation du disque sur la chape 7, on prévoit deux ailettes 8 et 9. Les ailettes 8 et 9 sont destinées à prendre appui sur des faces externes opposées de la protubérance 6.

Par ailleurs, pour verrouiller le ressort 1 sur la chape 7, il est connu de prévoir une languette 10 de verrouillage. La languette 10, ménagée sur la ressort 1, est logée dans un évidemment 11 ménagé à cet effet sur une face supérieure 12 de le protubérance 6.

Un tel ressort assure un bon maintien du moyen de friction et un bon guidage de celui-ci par rapport au disque. Cependant, ce ressort est de réalisation complexe. La forme de la chape 7 étant elle même complexe, le ressort doit être plié pour épouser certains contours de la chape 7. Ces contours et ces pliages permettent le bon maintien du ressort.

Le montage de ce ressort sur une telle chape 7 est également complexe. En effet, il est peu aisé de bien positionner le ressort 1 sur la chape 7.

Enfin, la forme du ressort 1 et du logement 13 implique l'utilisation d'un moyen de friction 4 ayant une oreille 3 très proéminente. Il s'ensuit une perte de quantité de garniture importante à l'endroit de l'oreille 3. Du fait d'une usure des moyens de friction, due à un frottement des moyens de friction contre le disque, la quantité de garniture diminue au cours des freinages. Il faut donc changer les moyens de friction. La fréquence de changement des moyens de friction est élevée, du fait de la perte de quantité de garniture à l'endroit de l'oreille 3.

Dans l'invention, on cherche à résoudre les problèmes exposés ci-dessus, en proposant un ressort de guidage et de maintien d'un moyen de friction de réalisation simple. On cherche également à faciliter un montage d'un tel ressort sur une chape de frein à disque.

Le principe de l'invention repose sur un ressort obtenu par pliage d'une tôle en acier inoxydable. Le pliage est facilité par une forme particulière du ressort. En effet, le ressort présente avantageusement une symétrie par rapport à un plan s'étendant longitudinalement par rapport à une largeur dudit ressort.

Afin de maintenir et/ou d'ancre le ressort sur une chape, ledit ressort est muni d'une protubérance élastique, venant s'engager élastiquement dans un orifice ménagé dans la chape de frein à disque.

Une forme de la chape est simplifiée, un unique évidemment devant être réalisé dans le corps de la chape, pour accueillir la protubérance.

Le ressort peut être muni d'ailettes facilitant le montage et le démontage. En rapprochant les ailettes l'une de l'autre, on modifie un contour de la protubérance. On diminue par exemple le contour externe de la protubérance. L'introduction de la protubérance dans l'orifice de la chape est alors facilitée. En relâchant les ailettes, la protubérance retrouve son contour externe plus grand et se retrouve bloquée dans son logement. On retire tout aussi facilement la protubérance lors du démontage en rapprochant à nouveau les ailettes l'une de l'autre.

Par ailleurs, l'oreille est logée dans un espace ménagé sur le ressort uniquement. Aussi, les dimensions de l'oreille ne sont fonction que des dimensions de cet espace. Aussi, il n'est pas nécessaire que l'oreille soit proéminente. On évite ainsi une perte de garniture à l'endroit de l'oreille. Il est possible de réduire au maximum les dimensions de l'oreille afin d'augmenter d'autant la surface de garniture.

L'invention a donc pour objet un ressort de guidage et de maintien d'un moyen de friction d'un frein à disque destiné à s'appliquer contre un disque de frein solidaire en rotation d'une roue, caractérisé en ce qu'il est muni d'une protubérance élastique pouvant s'engager élastiquement dans une cavité ménagée dans une chape du frein à disque, et en ce qu'il a une forme générale en U, une base du U étant munie de la protubérance élastique, la protubérance élastique s'étendant perpendiculairement à la base du U, vers l'extérieur de la forme en U, deux branches du U ménageant un espace dont des dimensions correspondent à des dimensions d'une oreille du moyen de friction.

L'invention a également pour objet un ressort caractérisé en ce qu'il est muni d'au moins une languette, une face interne de la languette étant en contact avec une parois externe de la chape.

L'invention a également pour objet un ressort caractérisé en ce qu'il est muni de deux languettes, une face interne de chacune des deux languettes étant en contact respectivement avec une parois externe de la chape, lesdites parois de la chape étant parallèles aux faces d'un disque de frein.

L'invention a également pour objet un ressort caractérisé en ce qu'il présente une symétrie selon un plan.

L'invention a également pour objet un ressort, caractérisé en ce qu'il est muni d'ailettes de montage et/ou démontage.

L'invention a également pour objet un ressort, caractérisé en ce qu'il est réalisé en tôle d'acier découpée et pliée.

L'invention a également pour objet un ressort caractérisé en ce qu'une plus grande largeur du ressort est comprise entre 20 et 25 mm, et une plus petite largeur entre 15 et 20 mm, la plus petite largeur étant située à l'endroit de la protubérance élastique.

L'invention a également pour projet un frein à disque caractérisé en ce qu'il est muni d'au moins un ressort de l'invention.

L'invention a également pour objet un frein à disque, caractérisé en ce qu'il est muni de deux moyens de frictions et de quatre ressorts, un moyen de friction étant maintenu sur une chape par deux ressorts.

L'invention sera mieux comprise à la lecture de la description qui suit et à l'examen des figures qui l'accompagnent. Celles ci ne sont présentées qu'à titre indicatif et nullement limitatif de l'invention. Les figures montrent :
- Figures 1 et 2 : Un ressort selon l'état de la technique déjà commenté.
- Figure 3 : Une vue en perspective d'un ressort selon un exemple particulier de réalisation de l'invention ;
- Figure 4 : Une représentation partielle en coupe d'une chape de frein à disque muni d'un ressort de l'invention et d'un moyen de friction.

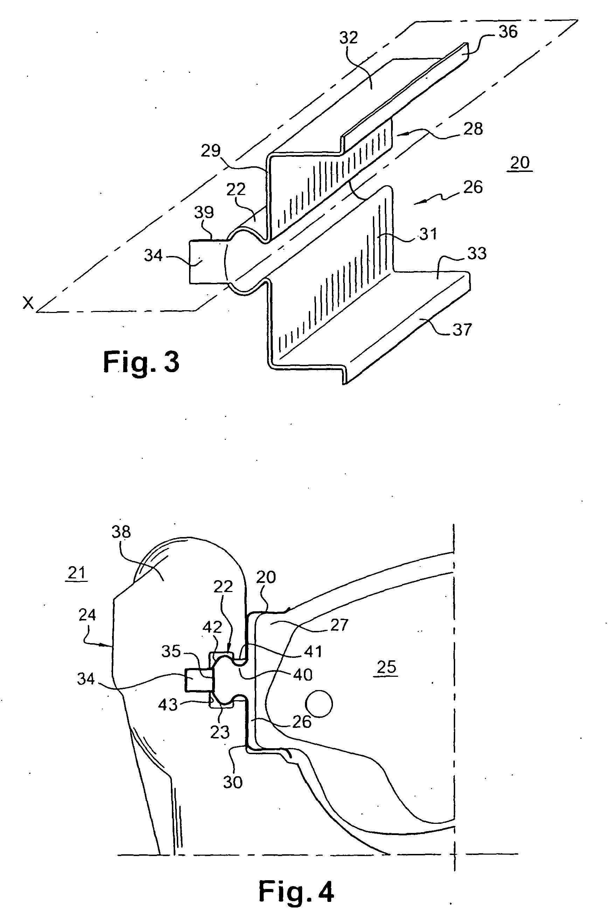

Sur la figure 3, on peut voir un ressort 20 de l'invention en perspective. Le ressort 20 est muni sur une face 29 d'une protubérance élastique 22. Cette protubérance 22 peut être enclipsée élastiquement dans une cavité 23 ménagée dans un bras 24 d'une chape 21 (figure 4) d'un frein à disque. De préférence, et notamment si il est cylindrique, la protubérance élastique 22 présente un profil comportant deux S en vis à vis, reliés l'un à l'autre par les extrémités des sommets. Ainsi, la protubérance élastique 22 possède une dimension sommitale plus grande qu'une dimension d'un resserrement 40 à la base de la protubérance élastique 22.

Sur la figure 4, on peut voir une représentation partielle de la chape 21 sur laquelle est monté un moyen de friction 25 tel qu'une plaquette de frein 25. La chape 21 est normalement formée de deux branches parallèles entre elles. Chaque branche porte à chacune de ses extrémités un bras 24. Le bras 24 d'une première extrémité de la première branche est relié au bras 24 d'une première extrémité de la seconde branche par exemple par une tige. De même le bras 24 d'une seconde extrémité de la première branche est relié au bras 24 d'une seconde extrémité de la seconde branche par une tige. Les tiges sont parallèles entre elles, et perpendiculaires aux branches. Sur la figure 4, seul un bras 24 est représenté. La cavité 23 est ménagée dans le bras 24 de la chape 21.

La plaquette 25 est maintenue sur la chape 21 par le ressort 20 de l'invention. Une oreille 27 de la plaquette 25 est logée dans un espace 26 du ressort 20. Le ressort 20 est lui-même maintenu sur la chape 21 par l'intermédiaire de la protubérance élastique 22 logée dans la cavité 23.

Le logement 26 est réalisé, lors d'un pliage d'une tôle formant le ressort 20, de manière à pouvoir y loger l'oreille 27 du moyen de friction 25. Des dimensions du logement 26 sont approximativement égales à des dimensions de l'oreille 27. C'est à dire que les dimensions du logement 26 permettent d'accueillir et de maintenir l'oreille 27.

Dans l'exemple de réalisation représenté aux figures 3 et 4, le ressort 20 a une forme générale cylindrique avec un profil en U. Lors du montage du ressort 20 sur la chape 21, une base 28 du U possède une face externe 29 accolée à une paroi 30 de la chape 21. Une face interne 31 de la base 28 du U 20 forme un fond du logement 26 accueillant l'oreille 27 du patin 25. Par faces externe 29 et interne 31, on entend faces dirigées respectivement vers la chape 21 et vers la plaquette 25. Les deux S du profil de la protubérance 22 résultent alors d'un pliage continu de la même plaque en tôle. Si la protubérance 22 n'est pas cylindrique, il est possible par exemple de la réaliser par un premier emboutissage perpendiculaire à un plan de la tôle, puis par un emboutissage de la base de la protubérance 22, perpendiculairement à la direction d'érection de ladite protubérance 22.

Deux branches 32 et 33 du ressort 20 en U s'étendent perpendiculairement à la base 28 du ressort 20, dans une direction opposée à la protubérance 22. Les branches 32 et 33, ainsi que la base 28 du ressort 20, ménagent le logement 26 dans lequel est logée l'oreille 27 de la plaquette 25. Les dimensions du logement 26 sont adaptées aux dimensions de l'oreille 27.

Pour maintenir le ressort 20 sur la chape 21, et empêcher tout débattement dudit ressort 20 en direction d'un disque (non représenté) ou dans une direction opposée au disque, on peut prévoit au moins une languette 34 sur le ressort 20. Dans un exemple de réalisation préférée de l'invention, on prévoit deux languettes 34, placées de part et d'autre de la protubérance 22, c'est à dire aux deux extrémités opposées de la protubérance 22 (une seule languette 34 est visible sur la figure 3 et 4). Une première languette 34 est accolée par une face interne 39 contre une première paroi externe 38 du bras 24 de la chape 21. Une seconde languette 34 est accolée contre une deuxième paroi externe du bras 24 de la chape 21, opposée à la première paroi externe 38.

Dans un exemple de réalisation particulier de l'invention, une fois la protubérance élastique 22 enclipsée dans la cavité 23, une face externe 35 de la protubérance 22 est accolée à un fond 43 de la cavité 23, et la languette 34 s'étend le long de la paroi externe 38 de la chape 21.

D'une manière générale, les languettes 34 doivent permettre de maintenir le ressort 20 contre la chape 21 afin d'empêcher un mouvement du ressort 20 dans une direction parallèle à l'axe de rotation du disque par rapport à la chape 21. La languette 34 peut également être disposée le long par exemple de la base 28 du U.

Dans l'exemple de réalisation représenté à la figure 3, une largeur des branches 32 et 33 est la même qu'une largeur de la base 28 du ressort 20 et qu'une largeur de la protubérance 22. Cette largeur est mesurée dans une direction parallèle à l'axe de rotation du disque. Cette largeur peut correspondre à une largeur du bras 24 de la chape 21. Cependant, il est possible de prévoir qu'une largeur de la base 28 du ressort 20 et de la protubérance élastique 22 soit inférieure à une largeur des branches 32 et 33 du ressort 20. En effet, la largeur des branches 32 et 33 est avantageusement égale à la largeur du bras 24 de la chape 21. Ainsi, au fur et à mesure que la plaquette 25 avance en direction du disque, du fait d'une usure de la plaquette 25, ladite plaquette 25 est toujours encadrée par le ressort 20 au niveau des branches 32 et 33. On assure ainsi un bon guidage de la plaquette 25, malgré l'usure de celle-ci. Par contre, il n'est pas nécessaire que la protubérance élastique 22 et la base 28 du ressort 20 aient également une largeur égale à la largeur du bras 24 de la chape 21. Elle peut être légèrement inférieure à la largeur du bras 24. Dans ce cas, les languettes 34 peuvent venir compenser cette différence de largeur. Les languettes 34 ont alors par exemple une forme générale en L. Une base du L s'étend parallèlement à la base 28 du ressort 20 pour compenser la plus petite largeur du ressort 20 et atteindre une largeur correspondant à l'épaisseur de la chape 21. Une branche du L s'étend perpendiculairement à la base du L. La branche du L est plaquée contre la paroi externe 38 du bras 24 de la chape 21. Dans un exemple particulier de réalisation de l'invention, la chape 21 a une épaisseur comprise entre 20 mm et 25 mm, par exemple 25 mm. Les branches 32 et 33 du U ont une largeur égale à l'épaisseur de la chape 21. La base 28 du ressort 20 et la protubérance élastique 22 ont une largeur comprise entre 20 mm et 15 mm, par exemple de 15 mm. Chaque languette 34, en forme de L, a alors une base de 5 mm de long. Ainsi, la taille des deux bases des languettes 34, comptabilisant 10 mm, permet au ressort 20 d'atteindre 25 mm de large à l'endroit de la base 28 du ressort 20 portant les languettes 34.

Dans l'exemple de réalisation représenté aux figures 3 et 4, le ressort 20 a une forme symétrique par rapport à un plan X de symétrie. Le plan de symétrie est parallèle aux branches 32 et 33 du ressort 20.

Le ressort 20 de l'invention peut être obtenu par découpage et pliage d'une tôle en acier inoxydable. L'épaisseur de la tôle est comprise par exemple entre 0,2 mm et 0,7 mm. Préférentiellement, l'épaisseur de la tôle est d'environ 0,4 mm. Le ressort 20 étant symétrique par rapport au plan X, le pliage est simple.

II est possible de prévoir des ailettes 36 et 37 de montage et de démontage du ressort 20. Par exemple, les ailettes 36 et 37 sont réalisées dans le prolongement respectivement des branches 32 et 33 du ressort 20. L'ailette 36 s'étend le long d'un rebord libre de la branche 32 dans toute sa largeur et avantageusement perpendiculairement par rapport à la branche 32. De même pour l'ailette 37 disposée le long d'un rebord libre de la branche 33. Lors du montage du ressort 20 dans la chape 21, on rapproche les branches 32 et 33 l'une de l'autre au moyen des ailettes 36 et 37. Le contour général extérieur de la protubérance 22 est modifié, notamment à l'endroit du resserrement 40. Un diamètre de l'arrondi 42 de la protubérance 22 est également diminué. Ces modifications du contour externe de la protubérance 22 permettent de l'introduire aisément dans la cavité 23. On relâche ensuite les ailettes 36 et 37. Les branches 32 et 33 reviennent en position repos, c'est-à-dire éloignées l'une de l'autre. La protubérance 22 retrouve son contour externe initial, c'est à dire relâché, qui épouse approximativement un contour interne de la cavité 23. Par ailleurs, il est possible de prévoir à l'endroit de la cavité 23 où est situé le resserrement 40 de la protubérance 22, un accotement 41 en saillie dirigé vers l'intérieur de la cavité 23. La protubérance 22 est ainsi maintenue dans la cavité 23. La face externe 29 de la base 28 du ressort 20 est accolée contre une paroi interne 30 de la chape 21.

L'invention concerne également un frein à disque muni d'au moins un ressort 20 de l'invention. Préférentiellement, le frein à disque est muni de quatre ressorts 20. Chaque moyen de friction 25 est maintenu sur la chape 21 par deux ressorts 20. Un moyen de friction 25 est muni de deux oreilles 27. Chaque ressort 20 maintient une oreille 27 contre le bras 24 de la chape 21, les oreille 27 d'un même moyen de friction 25 étant diamétralement opposées l'une de l'autre par rapport à un diamètre du disque. Les deux moyens de friction 25 du frein à disque encadrent ledit disque.

Le ressort 20 de l'invention, a une forme simplifiée par rapport à la forme du ressort de l'état de la technique. Cette simplification de la forme du ressort s'accompagne d'une simplification de montage du ressort 20 sur la chape 21 et de la forme de la chape 21 elle même. Les performances de maintien et de guidage du moyen de friction 25 par le ressort 20 sont maintenues.

## Revendications

1. Ressort (20) de guidage et de maintien d'un moyen de friction (25) d'un frein à disque destiné à venir s'appliquer contre un disque de frein solidaire en rotation d'une roue, **caractérisé en ce qu'**il est muni d'une protubérance (22) de maintien et/ou d'ancrage du ressort sur une chape (1) pouvant s'engager élastiquement dans une cavité (23) ménagée dans une chape (21) du frein à disque et **en ce qu'**il a une forme générale en U, une base (28) du U étant munie de la protubérance élastique, la protubérance élastique s'étendant perpendiculairement à la base du U, vers l'extérieur de la forme en U, deux branches (32, 33) du U ménageant un espace (26) dont des dimensions correspondent à des dimensions d'une oreille (27) du moyen de friction.

2. Ressort selon la revendication 1, **caractérisé en ce qu'**il est muni d'au moins une languette (34), une face interne (39) de la languette étant en contact avec une parois externe (38) de la chape.

3. Ressort selon la revendication 2, **caractérisé en ce qu'**il est muni je deux languettes (34), une face interne (39) de chacune des deux languettes étant en contact respectivement avec une parois externe (38) de la chape, lesdites parois de la chape étant parallèles aux faces d'un disque de frein.

4. Ressort selon l'une quelconque des revendications 1 à 3, **caractérisé en ce qu'**il présente une symétrie selon un plan (X).

5. Ressort selon l'une des revendications 1 à 4, **caractérisé en ce qu'**il est muni d'ailettes (36, 37) de montage et/ou démontage.

6. Ressort selon l'une quelconque des revendications 1 à 5, **caractérisé en ce qu'**il est réalisé en tôle d'acier découpée et pliée.

7. Ressort selon la revendication 6, **caractérisé en ce qu'**une plus grande largeur du ressort est comprise entre 20 et 25 mm, et une plus petite largeur entre 15 et 20 mm, la plus petite largeur étant située à l'endroit de la protubérance élastique.

8. Frein à disque **caractérisé en ce qu'**il est muni d'au moins un ressort selon l'une des revendications 1 à 7.

9. Frein à disque selon la revendication 8, **caractérisé en ce qu'**il est muni de deux moyens de frictions et de quatre ressorts, un moyen de friction étant maintenu sur une chape par deux ressorts.

## Claims

1. Spring (20) for guiding and holding a friction means (25) of a disc brake designed to press against a brake disc rotationally connected to a wheel, **characterized in that** it is provided with a protuberance (22) for holding and/or anchoring the spring on a caliper (21), being able to engage elastically in a cavity (23) made in a caliper (21) of the disc brake and **in that** it has a general U shape, a base (28) of the U being provided with the elastic protuberance, the elastic protuberance lying perpendicularly at the base of the U, towards the outside of the U shape, two branches (32, 33) of the U making a gap (26) of which the dimensions correspond to the dimensions of a lug (27) of the friction means.

2. Spring according to Claim 1, **characterized in that** it is provided with at least one tab (34), an inner face (39) of the tab being in contact with an outer wall (38) of the caliper.

3. Spring according to Claim 2, **characterized in that** it is provided with two tabs (34), one inner face (39) of each of the two tabs being in contact respectively with an outer wall (38) of the caliper, the said walls of the caliper being parallel to the faces of a brake disc.

4. Spring according to any one of Claims 1 to 3, **characterized in that** it is symmetrical along a plane (X) .

5. Spring according to one of Claims 1 to 4, **characterized in that** it is provided with flanges (36, 37) for fitting and/or removing.

6. Spring according to any one of Claims 1 to 5, **characterized in that** it is made of cut and folded steel sheet.

7. Spring according to Claim 6, **characterized in that** a greater width of the spring is between 20 and 25 mm, and a smaller width is between 15 and 20 mm, the smaller width being located at the point of the elastic protuberance.

8. Disc brake **characterized in that** it is provided with at least one spring according to one of Claims 1 to 7.

9. Disc brake according to Claim 8, **characterized in that** it is provided with two friction means and four springs, one friction means being held on a caliper by two springs.

## Patentansprüche

1. Feder (20) zum Führen und Halten eines Reibmittels (25) einer Scheibenbremse, das dazu vorgesehen ist, an eine Bremsscheibe, die mit einem Rad drehfest ist, in Anlage zu gelangen, **dadurch gekennzeichnet, dass** sie mit einem Vorsprung (22) zum Halten und/oder Verankern der Feder an einem Halter (1) versehen ist, der in einen in einem Halter (21) der Scheibenbremse ausgebildeten Hohlraum (23) elastisch eingreifen kann, und dass sie die allgemeine Form eines U besitzt, wobei eine Basis (28) des U mit dem elastischen Vorsprung versehen ist, wobei sich der elastische Vorsprung senkrecht zur Basis des U zum Äußeren der U-Form erstreckt und wobei zwei Schenkel (32, 33) des U einen Zwischenraum (26) ausbilden, dessen Abmessungen Abmessungen eines Ohrs (27) des Reibmittels entsprechen.

2. Feder nach Anspruch 1, **dadurch gekennzeichnet, dass** sie mit mindestens einer Lasche (34) versehen ist, wobei eine Innenfläche (39) der Lasche eine Außenwand (38) des Halters berührt.

3. Feder nach Anspruch 2, **dadurch gekennzeichnet, dass** sie mit zwei Laschen (34) versehen ist, wobei eine Innenfläche (39) jeder der beiden Laschen jeweils eine Außenwand (38) des Halters berührt, wobei die Wände des Halters parallel zu den Flächen einer Bremsscheibe verlaufen.

4. Feder nach einem der Ansprüche 1 bis 3, **dadurch gekennzeichnet, dass** sie eine Symmetrie gemäß einer Ebene (X) besitzt.

5. Feder nach einem der Ansprüche 1 bis 4, **dadurch gekennzeichnet, dass** sie mit Flügeln (36, 37) zum Anbringen und/oder Ausbauen versehen ist.

6. Feder nach einem der Ansprüche 1 bis 5, **dadurch gekennzeichnet, dass** sie aus gestanztem und gebogenem Stahlblech besteht.

7. Feder nach Anspruch 6, **dadurch gekennzeichnet, dass** eine größere Breite der Feder zwischen 20 und 25 mm und eine kleinere Breite zwischen 15 und 20 mm beträgt, wobei sich die kleinere Breite an der Stelle des elastischen Vorsprungs befindet.

8. Scheibenbremse, **dadurch gekennzeichnet, dass** sie mit mindestens einer Feder nach einem der Ansprüche 1 bis 7 ausgestattet ist.

9. Scheibenbremse nach Anspruch 8, **dadurch gekennzeichnet, dass** sie mit zwei Reibmitteln und vier Federn ausgestattet ist, wobei ein Reibmittel durch zwei Federn an einem Halter gehalten ist.
